# EUROPEAN PATENT SPECIFICATION

(11) **EP 3 771 780 B1**
(45) Date of publication and mention of the grant of the patent: **05.07.2023**
(21) Application number: 20188428.5
(22) Date of filing: 29.07.2020
(51) Int. Cl.: E04B 9/20, E04B 1/58

(54) **SUPPORT STRUCTURE ATTACHABLE TO A CEILING OR A WALL**
AN EINER DECKE ODER EINER WAND BEFESTIGBARE TRÄGERSTRUKTUR
STRUCTURE DE SUPPORT POUVANT ÊTRE FIXÉE SUR UN PLAFOND OU UN MUR

(30) Priority: 30.07.2019 IT 201900002619 U
(43) Date of publication of application: 03.02.2021
(73) Proprietor: BTICINO S.P.A., 21100 Varese, (IT)
(72) Inventor: PIGNI, Roberto, 21050 Gorla Maggiore (Varese) (IT)
(74) Representative: Verdecchia, Valerio

(56) References cited:
- EP-A2- 1 052 753
- DE-A1- 4 234 648
- RU-U1- 175 702

## Description

This invention relates to a support assembly having a structure attachable to a ceiling or a wall, in particular usable for the suspension of profiles.

For suspending and holding profiles in industrial ducts in a fixed position, it is known to construct suspensions from a ceiling by means of perforated support structures to which said profiles are welded or mechanically connected.

A known support structure is typically obtained by bending a metal plate, and comprises a C-shaped structure having two parallel side walls, which are connected to an upper wall adapted to connect to the ceiling. The side walls are equipped with suitable pairs of holes arranged coaxially, one on each side wall, whereby it is possible to fix a profile to the support structure through the use of pins inserted in each pair of holes and nuts adapted for locking the pins in position in a manner known per se.

The known support structures are not robust enough to maintain a profile connected thereto in a stable manner over time. Indeed, due to the weight of the profile or that which is connected thereto, the support structure tends to deform, and, in particular, the side walls tend to move away from each other. Moreover, both due to the deformation of the support structure and due to the connection not being sufficiently firm, the angular position of the profile connected to the support structure tends to change under the weight of said profile and that which is connected thereto. A support assembly according to the preamble of claim 1 is shown in the German patent application DE 42 34 648 A1.

The object of the present invention is to provide a support assembly having a support structure attachable to a ceiling or a wall which is more robust with respect to the known structures and which does not suffer from the drawbacks of the prior art.

A further object of the present invention is to provide a support assembly having a support structure adapted to allow the connection of a profile so that the position of the profile remains firmly fixed with respect to the support structure, even if inclined angularly relative to the vertical.

According to the present invention, such object is achieved by a support assembly as defined by appended independent claim 1.

Further features and advantages will be set out in more detail in the following detailed description, given purely by way of non-limiting example, with reference to the accompanying drawings, wherein:
Fig. 1 is a front perspective view of a support structure of a support assembly according to an embodiment of the invention;
Fig. 2 is a rear perspective view of the support structure in Fig. 1;
Fig. 3 is a perspective view of a support assembly comprising the support structure in Fig. 1;
Fig. 4 is a perspective view from below of the support assembly in Fig. 3 during a first assembly step;
Fig. 5 is a perspective view from below of the support assembly in Fig. 3 during a second assembly step;
Fig. 6 is a detail view of a part of Fig. 5;
Fig. 7 is a perspective view of the support assembly in Fig. 3 during a third stage of assembly;

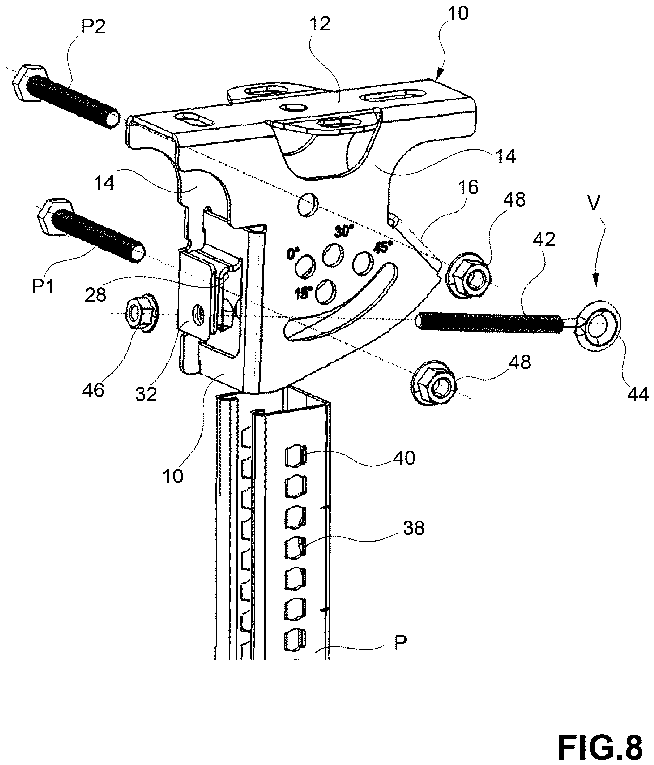

Fig. 8 is an exploded view of the support assembly of Fig. 3.

In all the figures accompanying this description, identical or functionally equivalent elements have been indicated with the same numerical references.

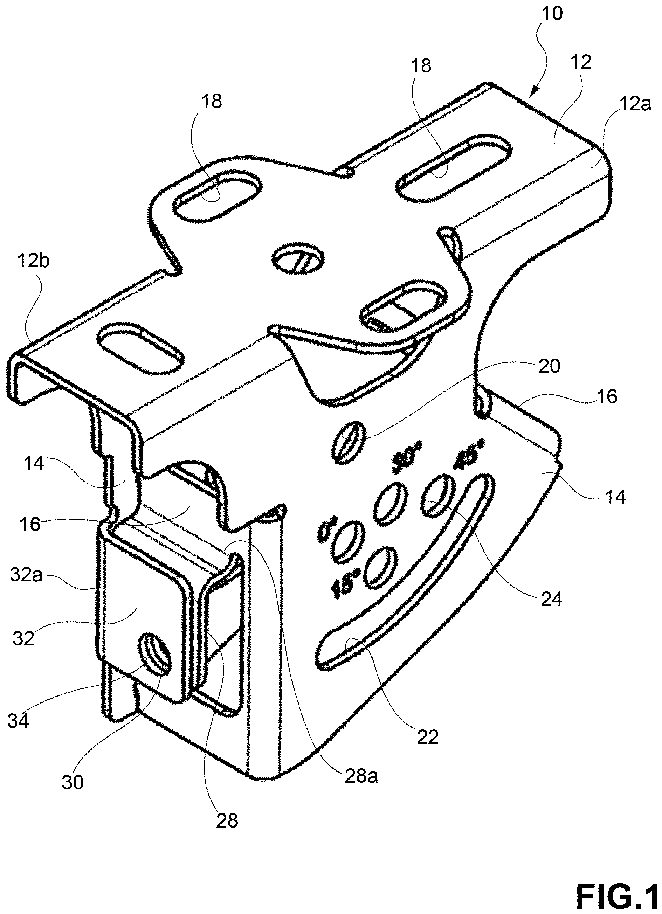

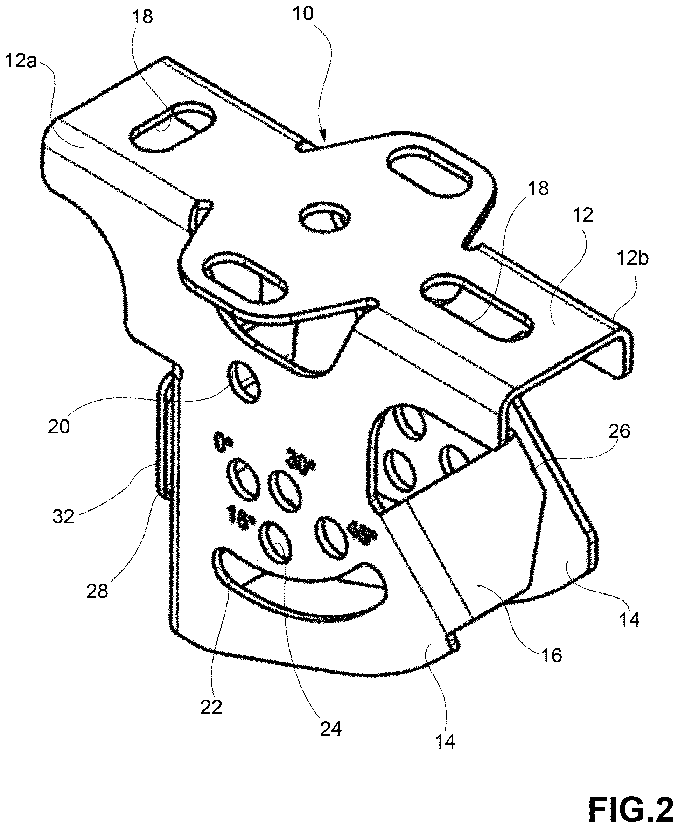

With initial reference to Fig. 1 and 2, a support structure of a support assembly according to the invention is generally indicated with 10. The support structure 10 essentially comprises an anchor wall 12, a pair of side walls 14, and a pair of reinforcement walls 16.

The anchor wall 12 is adapted to allow the support structure 10 to be fixed to a bearing structure (ideally, a ceiling, a wall, or a functionally equivalent surface) to which it is possible to suspend or connect a load or a structure. For this purpose, the anchor wall 12 is provided with openings 18 adapted to allow the engagement of mechanical connection means for attaching the support structure 10 to the bearing structure, in a manner known per se. For example, the support structure 10 may be bolted to a ceiling or a wall via the openings 18.

Said side walls 14 are connected along two opposite edges 12a and 12b of the anchor wall 12. The side walls 14 are arranged parallel to each other, and extend from the same side as the anchor wall 12, in the direction opposite to the ceiling, when the support structure 10 is mounted to the ceiling, or in the direction opposite the wall, when the support structure 10 is mounted to a wall.

The side walls 14 are provided with a plurality of holes, which are equally repeated on each side wall 14 and are arranged coaxially in pairs. In particular, a circular through hole 20 is defined on one side wall 14, with dimensions coinciding with a corresponding circular through hole 20 and arranged on the other side wall 14, said circular holes 20 being coaxial with each other. Essentially, the circular holes 20 are configured to receive a support pin P1 adapted to connect the profile P to the support structure. Furthermore, on one side wall 14 there is provided a slotted through hole 22 with a shape and dimensions coinciding with a respective slotted through hole 22 and arranged on the other side wall 14, said slotted holes 22 being aligned with each other. Thus, also the slotted holes 22 are essentially configured to receive a support pin P2 adapted to connect the profile P to the support structure. Obviously, it is possible to construct a support structure 10 comprising a plurality of slotted holes 22 on each side wall 14 and/or a plurality of circular holes 20 on each side wall 14 according to the object to be supported and the number of angular positions desired.

Further positioning holes 24 may be defined on the side walls 14. In particular, such positioning holes 24 have the same dimensions and are provided to be coaxial in pairs, each pair of positioning holes 24 comprising a positioning hole 24 on one of the two side walls 14. Each pair of positioning holes 24 is arranged at predetermined angular positions. The "angular position," in the context of the positioning holes 24, is here understood as the angle between the plane passing through the common axis of a pair of positioning holes 24 and the common axis of the circular holes 20 (which, as mentioned, are coaxial) and the plane passing through the vertical and through the common axis of the circular holes 20 (which, as mentioned, are coaxial). In the example shown in the figures, four pairs of positioning holes 24 are defined, having, respectively, an angular position of 5°, 10°, 15° and 20°. The angular position of each pair of positioning holes 24 may be (as seen in the figures) indicated on the side walls 14 in the proximity of the positioning hole 24 to which it refers to facilitate assembly by the operator.

As anticipated, the structure 10 further comprises a pair of reinforcement walls 16, which connect the side walls 14 transversely. The reinforcement walls 16 are positioned so as to define a box-like structure for the support structure 10, i.e. a continuous structure on four sides, with a clear improvement of the mechanical strength and of the capacity to bear loads. For this purpose, the reinforcement walls 16 are arranged on planes that do not coincide with each other, and, advantageously, are arranged with one on one side and one on the other side of a plane passing through an axis perpendicular to the anchor wall 12 (which, when the support structure 10 is mounted to a ceiling parallel to the floor, is essentially a vertical axis) and through the common axis of the circular holes 20. According to the invention, the reinforcement walls 16 are arranged on opposite sides of a transverse center plane of the anchor wall 12, i.e. a plane that cuts transversely the anchor wall 12 at half of the length of the latter in the longitudinal direction.

The reinforcement walls 16 are made in one piece with the side walls 14 and with the anchor wall 12. In particular the reinforcement walls 16 are directly contiguous to a side wall 14. On the other side wall 14, respective insertion slots 26 are defined, with which the reinforcement walls 16 engage to connect to the other side wall 14.

The support structure 10 further comprises a first tab 28, cantilevered to a reinforcement wall 16 along a single edge 28a of the first tab 28 and on which a support hole 30, adapted to accommodate an eye bolt V, is provided. In particular, said first tab 28 defines a first surface, parallel to the reinforcement wall 16 to which it is connected. Furthermore, the support structure 10 comprises a second tab 32, cantilevered to a side wall 14 along a single edge 32a of the second tab 32. The edge 32a of the second tab 32 is arranged non-parallel to the edge 28a of the first tab 28, and is advantageously arranged perpendicular thereto. The second tab 32 also defines a surface, in particular a second surface, which is arranged parallel to the first surface defined by the first tab 28, and faces said first surface. A through hole 34 is provided on the second tab 32, coaxially to the support hole 30, so that the eye bolt V is subsequently accommodated by the support hole 30 and by the hole 34.

A further aspect of the invention relates to a support assembly 36, according to claim 1, for the suspension of a profile P, wherein the profile P has a first and a second pair of through holes 38 and 40, coaxial two by two, and wherein the support assembly 36 comprises:
- the support structure 10 adapted to support said profile P and comprising:
   an anchor wall 12, adapted to allow the support structure 10 to be fixed to a bearing structure;
   a pair of side walls 14, arranged parallel to each other and connected to opposite edges 12a, 12b of the anchor wall 12,
      each side wall 14 having at least one respective circular through hole 20 with dimensions coinciding with a corresponding circular through hole 20 arranged on the other side wall 14, said circular holes 20 being coaxial to each other,
      each side wall 14 further having a respective slotted through hole 22 with a shape and dimensions coinciding with a respective slotted through hole 22 arranged on the other side wall 14, said slotted holes 22 being aligned with each other,
      said circular holes 20 and said slotted holes 22 being configured two by two to receive respective support pins P1, P2 adapted to connect said profile P to the support structure 10,
   a pair of reinforcement walls 16, lying on planes that do not coincide with each other and configured to connect said side walls 14 transversely to each other,
   wherein each reinforcement wall 16 is directly adjacent to one of said side walls 14 and is configured to engage with a respective insertion slot 26 arranged on the other of said side walls 14 ,
      wherein one of said reinforcement walls 16 has a support through hole 30, adapted to accommodate an eye bolt V,
      the support structure 10 further comprising a first tab 28 cantilevered to a reinforcement wall 16 along a single edge 28a of said first tab 28, said support hole 30 being formed on the first tab 28,
      the support structure 10 further comprising a second tab 32 cantilevered to a side wall 14 along a single edge 32a of said second tab 32, the edge 32a of said second tab 32 being arranged non-parallel to the edge 28a of said first tab 28 on the second tab 32 there being formed a through hole 34, coaxial with said support hole 30,
      wherein the first tab 28 defines a first surface parallel to the reinforcement wall 16 to which the first tab 28 is connected, and the second tab 32 defines a second surface which faces said first surface of the first tab 28,;
- a first support pin P1 inserted through the two respective slotted holes 22 of the pair of side walls 14, perpendicular to each side wall 14, and through the first pair of holes 38 of the profile P;
- a second support pin P2 inserted through the two respective circular holes 20 of the pair of side walls 14, perpendicular to each side wall 14, and through the second pair of holes 40 of the profile P; and
- an eye bolt V, having a threaded rod 42 and an eye 44 connected thereto, the eye bolt V being inserted through said support hole 30 of the support structure 10 so that the first support pin P1 also passes through the eye 44 of the eye bolt V, and a pair of nuts 46, arranged on the threaded rod 42 of the eye bolt V, respectively on one side and the other of the reinforcement wall 16 which has the support hole 30, so as to limit the axial travel of the eye bolt V as a function of their clamping force against the reinforcement wall 16. In this way, it is possible to ensure that the angular position of the profile P is maintained even more securely.

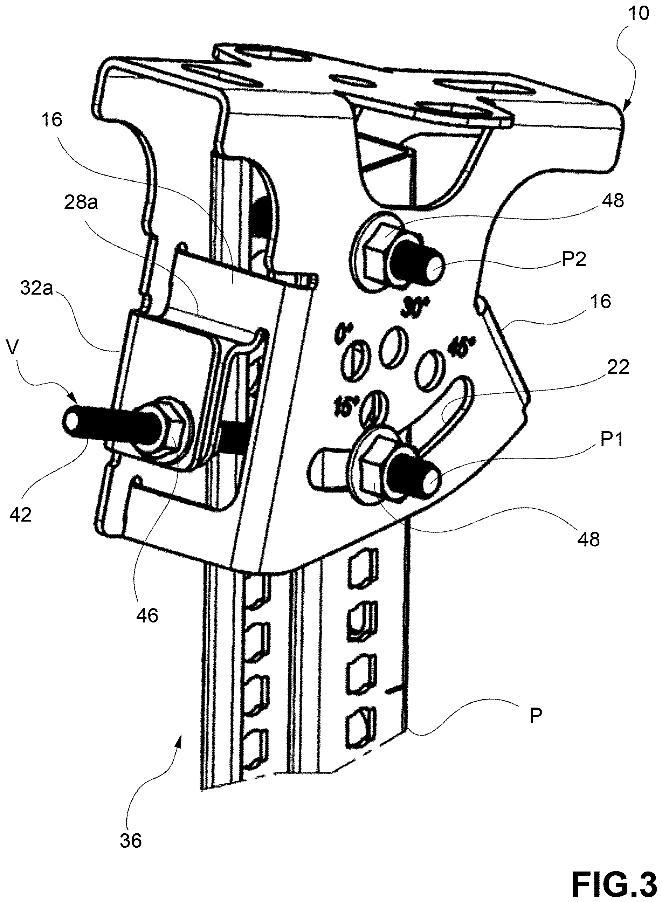

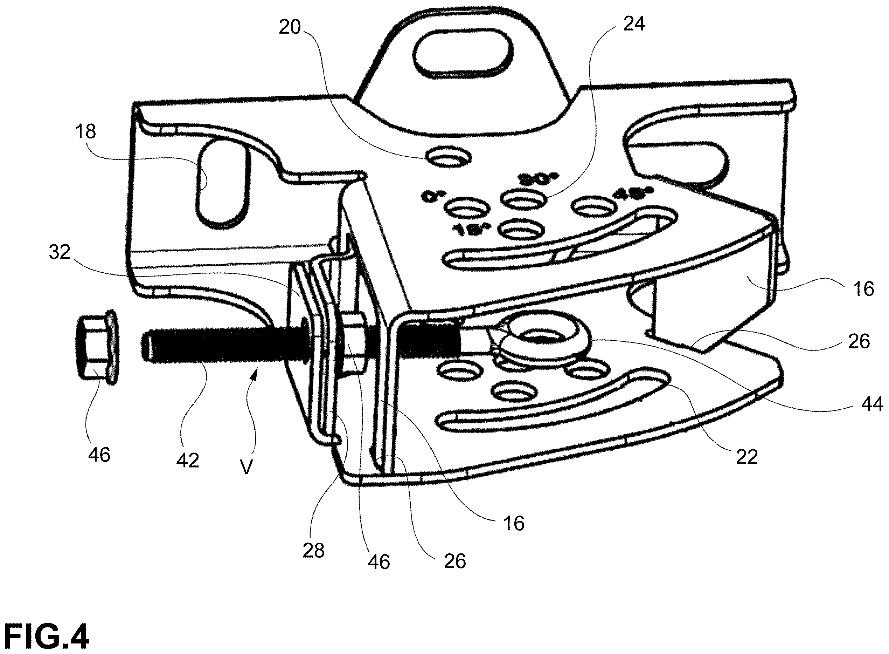

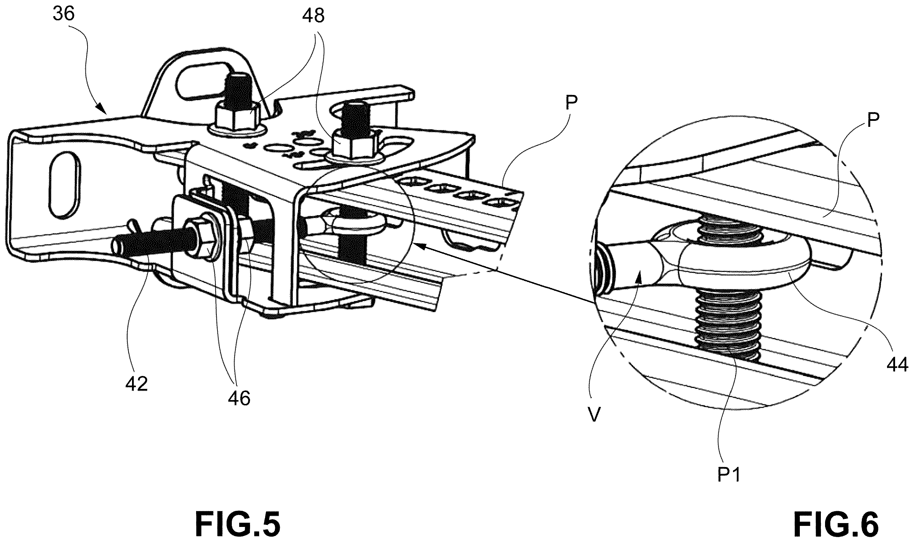

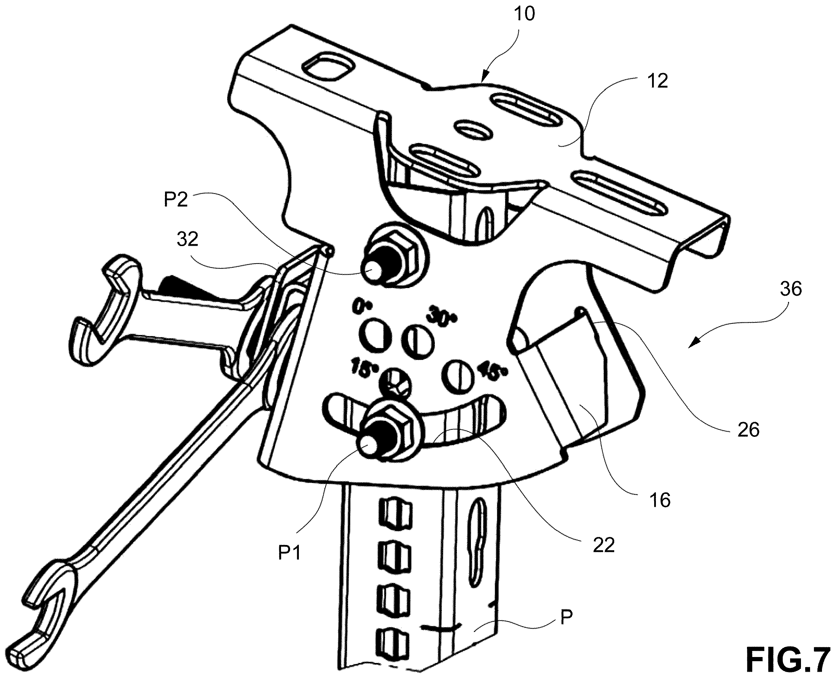

As may be deduced from Fig. 3 to 7, mounting a support assembly 36 according to the invention follows a succession of steps. After having prepared the support structure 10, the eye bolt V is inserted within the support hole 30 and the hole 34, which are coaxial and pass through the first tab 28 and the second tab 32, respectively. In one embodiment, the support hole 30 and the hole 34 have slightly larger dimensions than the cross section of the threaded rod 42 of the eye bolt V, so as to allow, if necessary, an inclination of the eye bolt V relative to an axis normal to the plane of the first tab 28. The profile P is then positioned, with the first pair of holes 38 and the second pair of holes 40 arranged aligned with the slotted holes 22 and the circular holes 20 respectively. Thus, the first support pin P1 is inserted through the two slotted holes 22 of the side walls 14, perpendicular to each side wall 14, and through the first pair of holes 38 of the profile P, as well as through the eye 44 of the eye bolt V, and the second support pin P2 through the two circular holes 20 of the side walls 14, perpendicular to each side wall 14, and through the second pair of holes 40 of the profile P. Clearly, during assembly, the profile P, the eye bolt V and the first support pin P1 shall be arranged according to the desired angular position for the profile P, since the slotted holes 22 may define a plurality of angular positions. Also on the first support pin P1 and on the first support pin P2, nuts 48 may advantageously be arranged adapted to lock the position of the pins and to ensure robustness to the support assembly 36.

The invention also relates to a manufacturing process for obtaining a support assembly comprising the support structure 10 starting from a single metal plate.

The process comprises the steps of:
a) arranging an initially flat metal plate on a workpiece support;
b) cutting said metal plate so as to obtain a plate having a planform equal to that of the support structure 10, when developed on a plane;
c) drilling said metal plate so as to obtain said circular through holes 20 and said slotted through holes 22; and
d) bending said metal plate so as to obtain an anchor wall 12, a pair of side walls 14 and a pair of reinforcement walls 16 according to the invention.

During the execution of the cutting step b) the method includes the step of obtaining the insertion slots 26 on the side walls 14 as defined above, and, during the bending step d) the method includes the step of inserting each reinforcement wall 16 in a respective insertion slot 26.

As is clear from the foregoing description, a support assembly according to the invention has various advantages over the prior art.

First of all, by virtue of the presence of suitable reinforcement walls arranged transversely with respect to the side walls, the support structure is more robust. In this way, the deformations that it will undergo in its entirety during use are more limited than in the prior art, ensuring a longer operational life of the piece, as well as a better maintaining the angular position of the profile connected to the support structure and to the support assembly.

Moreover, by virtue of the presence of the eye bolt arranged transversely to the first support pin, in the support assembly according to the invention it is possible to keep the angular position of the profile connected to the support structure firmly fixed, thus avoiding that during use for the suspension of a profile connected to the ceiling or to a wall, the angular position of said profile tends to reach the vertical.

Finally, by virtue of the manufacturing process according to the invention it is possible to easily and economically construct a support assembly which is advantageous with respect to the prior art.

## Claims

1. Support assembly (36) for the suspension of a profile (P), wherein the profile (P) has a first and a second pair of through holes (38, 40), coaxial two by two, and wherein the support assembly (36) comprises
a support structure (10) for industrial ducts attachable to a ceiling or a wall and adapted to support said profile (P), comprising:
an anchor wall (12), adapted to allow the support structure (10) to be fixed to a bearing structure;
a pair of side walls (14), arranged parallel to each other and connected to opposite edges (12a, 12b) of the anchor wall (12),
each side wall (14) having at least one respective circular through hole (20) with dimensions coinciding with a corresponding circular through hole (20) arranged on the other side wall (14), said circular holes (20) being coaxial to each other,
each side wall (14) further having a respective slotted through hole (22) with a shape and dimensions coinciding with a respective slotted through hole (22) arranged on the other side wall (14), said slotted holes (22) being aligned with each other,
said circular holes (20) and said slotted holes (22) being configured two by two to receive respective support pins (P1, P2) adapted to connect said profile (P) to the support structure (10),
the support assembly being **characterized in that** the support structure further comprises
a pair of reinforcement walls (16), lying on planes that do not coincide with each other and configured to connect said side walls (14) transversely to each other,
wherein each reinforcement wall (16) is directly adjacent to one of said side walls (14) and is configured to engage with a respective insertion slot (26) arranged on the other of said side walls (14) ,
wherein one of said reinforcement walls (16) has a support through hole (30), adapted to accommodate an eye bolt (V),
the support structure (10) further comprising a first tab (28) cantilevered to a reinforcement wall (16) along a single edge (28a) of said first tab (28), said support hole (30) being formed on the first tab (28),
the support structure (10) further comprising a second tab (32) cantilevered to a side wall (14) along a single edge (32a) of said second tab (32), the edge (32a) of said second tab (32) being arranged non-parallel to the edge (28a) of said first tab (28) on the second tab (32) there being formed a through hole (34), coaxial with said support hole (30),
wherein the first tab (28) defines a first surface parallel to the reinforcement wall (16) to which the first tab (28) is connected, and the second tab (32) defines a second surface which faces said first surface of the first tab (28),
a first support pin (P1) inserted through the two respective slotted holes (22) of the pair of side walls (14), perpendicular to each side wall (14), and through the first pair of holes (38) of the profile (P),
a second support pin (P2), inserted through the two respective circular holes (20) of the pair of side walls (14), perpendicular to each side wall (14), and through the second pair of holes (40) of the profile (P), and
an eye bolt (V) having a threaded rod (42) and an eye (44) connected thereto, arranged through said support hole (30) of the support structure (10) so that the first support pin (P1) passes through the eye (44) of the eye bolt (V),
the support assembly (36) further comprising
a pair of nuts (46) arranged on the threaded rod (42) of the eye bolt (V), respectively on one side and the on other one of the reinforcement wall (16) having said support hole (30), said nuts (46) being adapted to limit the axial travel of the eye bolt (V) as a function of their clamping force against said reinforcement wall (16).

2. An assembly according to claim 1, wherein said reinforcement walls (16) of the support structure (10) are arranged on opposite sides of a plane passing through an axis perpendicular to the anchor wall (12) and through the common axis of the circular holes (20).

3. An assembly according to claim 1 or claim 2, wherein said reinforcement walls (16), said side walls (14) and said anchor wall (12) are all made in one piece.

4. An assembly according to any claim from 1 to 3, wherein said anchor wall (12) is provided with openings (18) adapted to allow the engagement of mechanical connection means for attaching the support structure (10) to the bearing structure.

5. Manufacturing process for obtaining a support structure (10), being part of a support assembly according to claim 1, comprising the steps of:
a) arranging an initially flat metal plate on a workpiece support;
b) cutting said metal plate, so as to obtain a plate having a planform equal to that of the support structure (10), when developed on a plane;
c) drilling said metal plate so as to obtain said circular through holes (20) and said slotted through holes (22); and
d) bending said metal plate so as to obtain an anchor wall (12), a pair of side walls (14) and a pair of reinforcement walls (16), wherein
the anchor wall (12) is adapted to allow the support structure (10) to be fixed to a bearing structure;
the pair of side walls (14) are arranged parallel to each other and connected to opposite edges (12a, 12b) of the anchor wall (12), each side wall (14) having at least one respective circular through hole (20) with dimensions coinciding with a corresponding circular through hole (20) arranged on the other side wall (14), said circular holes (20) being coaxial to each other, each side wall (14) further having a respective slotted through hole (22) with a shape and dimensions coinciding with a respective slotted through hole (22) arranged on the other side wall (14), said slotted holes (22) being aligned with each other, said circular holes (20) and said slotted holes (22) being configured two by two to receive respective support pins (P1, P2) adapted to connect said profile (P) to the support structure (10),
the pair of reinforcement walls (16) lying on planes that do not coincide with each other and being configured to connect said side walls (14) transversely to each other.
wherein step b) further comprises the step of:
b') cutting said metal plate so as to obtain insertion slots (26);
and wherein step d) is followed by the step of:
d') inserting each reinforcement wall (16) into one of said insertion slots (26).

## Patentansprüche

1. Stützbaugruppe (36) für die Aufhängung eines Profils (P), bei der das Profil (P) ein erstes und ein zweites Paar Durchgangslöcher (38,40), in Zweiergruppen koaxial, aufweist, und bei der die Stützbaugruppe (36)
eine Stützstruktur (10) für industrielle Kanäle aufweist, die an einer Decke oder einer Wand anbringbar ist und dazu angepasst ist, das Profil (P) abzustützen, mit:
einer Ankerwand (12), die dazu angepasst ist, zuzulassen, dass die Stützstruktur (10) an einer Lagerstruktur befestigt wird;
einem Paar Seitenwände (14), die parallel zueinander angeordnet sind und mit gegenüberliegenden Rändern (12a, 12b) der Ankerwand (12) verbunden sind,
bei denen jede Seitenwand (14) mindestens ein jeweiliges kreisförmiges Durchgangsloch (20) mit Abmessungen aufweist, die mit einem entsprechenden kreisförmigen Durchgangsloch (20), das auf der anderen Seitenwand (14) angeordnet ist, zusammenfallen, welche kreisförmigen Löcher (20) koaxial zueinander sind,
bei denen jede Seitenwand (14) ferner ein jeweiliges schlitzförmiges Durchgangsloch (22) mit einer Form und Abmessungen aufweist, die mit einem jeweiligen schlitzförmigen Durchgangsloch (22), das auf der anderen Seitenwand (14) angeordnet ist, zusammenfallen, welche schlitzförmigen Löcher (22) zueinander ausgerichtet sind,
welche kreisförmigen Löcher (20) und welche schlitzförmigen Löcher (22) in Zweiergruppen dazu ausgebildet sind, jeweilige Stützstifte (P1, P2), die dazu angepasst sind, das Profil (P) mit der Stützstruktur (10) zu verbinden, aufzunehmen,
welche Stützbaugruppe **dadurch gekennzeichnet ist, dass** die Stützstruktur ferner ein Paar Verstärkungswände (16) aufweist, die auf Ebenen liegen, die nicht miteinander zusammenfallen, und dazu ausgebildet sind, die Seitenwände (14) quer miteinander zu verbinden,
bei der jede Verstärkungswand (16) direkt an eine der Seitenwände (14) angrenzt und dazu ausgebildet ist, mit einem jeweiligen Einfügungsschlitz (26), der auf der anderen der Seitenwände (14) angeordnet ist, in Eingriff zu kommen,
bei der eine der Verstärkungswände (16) ein Stützdurchgangsloch (30), das dazu angepasst ist, eine Augenschraube (V) aufzunehmen, aufweist,
welche Stützstruktur (10) ferner eine erste Lasche (28), die zu einer Verstärkungswand (16) entlang eines einzelnen Rands (28a) der ersten Lasche (28) ausgekragt ist, aufweist, welches Stützloch (30) auf der ersten Lasche (28) ausgebildet ist,
welche Stützstruktur (10) ferner eine zweite Lasche (32), die zu einer Seitenwand (14) entlang eines einzelnen Rands (32a) der zweiten Lasche (32) ausgekragt ist, aufweist, welcher Rand (32a) der zweiten Lasche (32) nicht parallel zu dem Rand (28a) der ersten Lasche (28) angeordnet ist, bei der auf der zweiten Lasche (32) ein Durchgangsloch (34), koaxial mit dem Stützloch (30), ausgebildet ist,
bei der die erste Lasche (28) eine erste Oberfläche parallel zu der Verstärkungswand (16), mit der die erste Lasche (28) verbunden ist, definiert, und die zweite Lasche (32) eine zweite Oberfläche, die der ersten Oberfläche der ersten Lasche (28) gegenüberliegt, definiert,
einen ersten Stützstift (P1), der durch die zwei jeweiligen schlitzförmigen Löcher (22) des Paares Seitenwände (14), senkrecht zu jeder Seitenwand (14), und durch das erste Paar Löcher (38) des Profils (P) eingefügt ist,
einen zweiten Stützstift (P2), der durch die zwei jeweiligen kreisförmigen Löcher (20) des Paares Seitenwände (14), senkrecht zu jeder Seitenwand (14), und durch das zweite Paar Löcher (40) des Profils (P) eingefügt ist, und
eine Augenschraube (V), die eine Gewindestange (42) und ein Auge (44), das damit verbunden ist, aufweist, die durch das Stützloch (30) der Stützstruktur (10) so angeordnet ist, dass der erste Stützstift (P1) durch das Auge (44) der Augenschraube (V) verläuft,
welche Stützbaugruppe (36) ferner
ein Paar Muttern (46) aufweist, die auf der Gewindestange (42) der Augenschraube (V) respektive auf einer Seite und auf der anderen der Verstärkungswand (16), die das Stützloch (30) aufweist, angeordnet sind, welche Muttern (46) dazu angepasst sind, die axiale Bewegung der Augenschraube (V) als eine Funktion ihrer Klemmkraft gegen die Verstärkungswand (16) zu begrenzen.

2. Baugruppe nach Anspruch 1, bei der die Verstärkungswände (16) der Stützstruktur (10) auf gegenüberliegenden Seiten einer Ebene, die durch eine Achse senkrecht zu der Ankerwand (12) und durch die gemeinsame Achse der kreisförmigen Löcher (20) verläuft, angeordnet sind.

3. Baugruppe nach Anspruch 1 oder Anspruch 2, bei der die Verstärkungswände (16), die Seitenwände (14) und die Ankerwand (12) alle einstückig ausgebildet sind.

4. Baugruppe nach einem Anspruch von 1 bis 3, bei der die Ankerwand (12) mit Öffnungen (18) versehen ist, die dazu angepasst sind, den Eingriff mechanischer Verbindungsmittel zum Anbringen der Stützstruktur (10) an der Lagerstruktur zuzulassen.

5. Herstellungsprozess zum Erhalten einer Stützstruktur (10), die Teil einer Stützbaugruppe nach Anspruch 1 ist, mit den Schritten:
a) Anordnen einer anfänglich flachen Metallplatte auf einer Werkstückauflage;
b) Schneiden der Metallplatte, so dass eine Platte mit einer Planform gleich jener der Stützstruktur (10), wenn sie auf einer Ebene entfaltet ist, erhalten wird.
c) Bohren der Metallplatte, so dass die kreisförmigen Durchgangslöcher (20) und die schlitzförmigen Durchgangslöcher (22) erhalten werden; und
d) Biegen der Metallplatte, so dass eine Ankerwand (12), ein Paar Seitenwände (14) und ein Paar Verstärkungswände (16) erhalten werden, bei dem
die Ankerwand (12) dazu angepasst ist, zuzulassen, dass die Stützstruktur (10) an einer Lagerstruktur befestigt wird;
das Paar Seitenwände (14) parallel zueinander angeordnet und mit gegenüberliegenden Rändern (12a, 12b) der Ankerwand (12) verbunden ist, bei denen jede Seitenwand (14) mindestens ein jeweiliges kreisförmiges Durchgangsloch (20) mit Abmessungen aufweist, die mit einem entsprechenden kreisförmigen Durchgangsloch (20), das auf der anderen Seitenwand (14) angeordnet ist, zusammenfallen, welche kreisförmigen Löcher (20) koaxial zueinander sind, bei denen jede Seitenwand (14) ferner ein jeweiliges schlitzförmiges Durchgangsloch (22) mit einer Form und Abmessungen aufweist, die mit einem jeweiligen schlitzförmigen Durchgangsloch (22), das auf der anderen Seitenwand (14) angeordnet ist, zusammenfallen, welche schlitzförmigen Löcher (22) zueinander ausgerichtet sind, welche kreisförmigen Löcher (20) und welche schlitzförmigen Löcher (22) in Zweiergruppen dazu ausgebildet sind, jeweilige Stützstifte (P1, P2), die dazu angepasst sind, das Profil (P) mit der Stützstruktur (10) zu verbinden, aufzunehmen,
welches Paar Verstärkungswände (16) auf Ebenen liegt, die nicht miteinander zusammenfallen, und dazu ausgebildet ist, die Seitenwände (14) quer miteinander zu verbinden.
bei dem Schritt b) ferner den Schritt:
b') Schneiden der Metallplatte, so dass Einfügungsschlitze (26) erhalten werden, aufweist;
und bei dem Schritt d) von dem Schritt:
d') Einfügen jeder Verstärkungswand (16) in einen der Einfügungsschlitze (26) gefolgt wird.

## Revendications

1. Ensemble de support (36) pour la suspension d'un profilé (P), dans lequel le profilé (P) a une première et une deuxième paire de trous traversants (38, 40), coaxiaux deux par deux, et dans lequel l'ensemble de support (36) comprend
une structure de support (10) pour conduits industriels apte à être fixée à un plafond ou à un mur et adaptée pour porter ledit profilé (P), comprenant :
une paroi d'ancrage (12), adaptée pour permettre à la structure de support (10) d'être fixée à une structure d'appui ;
une paire de parois latérales (14), agencées en parallèle l'une à l'autre et reliées à des bords opposés (12a, 12b) de la paroi d'ancrage (12),
chaque paroi latérale (14) ayant au moins un trou traversant circulaire (20) respectif avec des dimensions coïncidant avec un trou traversant circulaire (20) correspondant agencé sur l'autre paroi latérale (14), lesdits trous circulaires (20) étant coaxiaux les uns aux autres,
chaque paroi latérale (14) ayant en outre un trou traversant oblong (22) respectif avec une forme et des dimensions coïncidant avec un trou traversant oblong (22) respectif agencé sur l'autre paroi latérale (14), lesdits trous oblongs (22) étant alignés les uns avec les autres,
lesdits trous circulaires (20) et lesdits trous oblongs (22) étant configurés deux par deux pour recevoir des broches de support (P1, P2) respectives adaptées pour relier ledit profilé (P) à la structure de support (10),
l'ensemble de support étant **caractérisé en ce que** la structure de support comprend en outre
une paire de parois de renfort (16), se trouvant sur des plans qui ne coïncident pas l'un avec l'autre et configurées pour relier lesdites parois latérales (14) transversalement l'une à l'autre,
dans lequel chaque paroi de renfort (16) est directement adjacente à l'une desdites parois latérales (14) et est configurée pour se mettre en prise avec une fente d'insertion (26) respective agencée sur l'autre desdites parois latérales (14),
dans lequel l'une desdites parois de renfort (16) a un trou traversant de support (30), adapté pour recevoir un boulon à oeil (V),
la structure de support (10) comprenant en outre une première languette (28) en porte-à-faux par rapport à une paroi de renfort (16) le long d'un unique bord (28a) de ladite première languette (28), ledit trou de support (30) étant formé sur la première languette (28),
la structure de support (10) comprenant en outre une deuxième languette (32) en porte-à-faux par rapport à une paroi latérale (14) le long d'un unique bord (32a) de ladite deuxième languette (32), le bord (32a) de ladite deuxième languette (32) étant agencé de manière non parallèle au bord (28a) de ladite première languette (28), sur la deuxième languette (32) un trou traversant (34) étant formé, coaxial audit trou de support (30),
dans lequel la première languette (28) définit une première surface parallèle à la paroi de renfort (16) à laquelle la première languette (28) est reliée, et la deuxième languette (32) définit une deuxième surface qui fait face à ladite première surface de la première languette (28),
une première broche de support (P1) insérée à travers les deux trous oblongs (22) respectifs de la paire de parois latérales (14), perpendiculaire à chaque paroi latérale (14), et à travers la première paire de trous (38) du profilé (P),
une deuxième broche de support (P2), insérée à travers les deux trous circulaires (20) respectifs de la paire de parois latérales (14), perpendiculaire à chaque paroi latérale (14), et à travers la deuxième paire de trous (40) du profilé (P), et
un boulon à oeil (V) ayant une tige filetée (42) et un oeil (44) relié à celle-ci, agencé à travers ledit trou de support (30) de la structure de support (10) de sorte que la première broche de support (P1) traverse l'oeil (44) du boulon à oeil (V),
l'ensemble de support (36) comprenant en outre
une paire d'écrous (46) agencés sur la tige filetée (42) du boulon à oeil (V), respectivement sur un côté et sur l'autre de la paroi de renfort (16) ayant ledit trou de support (30), lesdits écrous (46) étant adaptés pour limiter le déplacement axial du boulon à oeil (V) en fonction de leur force de serrage contre ladite paroi de renfort (16).

2. Ensemble selon la revendication 1, dans lequel lesdites parois de renfort (16) de la structure de support (10) sont agencées sur des côtés opposés d'un plan traversant un axe perpendiculaire à la paroi d'ancrage (12) et traversant l'axe commun des trous circulaires (20).

3. Ensemble selon la revendication 1 ou la revendication 2, dans lequel lesdites parois de renfort (16), lesdites parois latérales (14) et ladite paroi d'ancrage (12) sont toutes réalisées en une seule pièce.

4. Ensemble selon une quelconque revendication de 1 à 3, dans lequel ladite paroi d'ancrage (12) est munie d'ouvertures (18) adaptées pour permettre la mise en prise de moyens de liaison mécanique pour la fixation de la structure de support (10) à la structure d'appui.

5. Processus de fabrication pour l'obtention d'une structure de support (10), qui fait partie d'un ensemble de support selon la revendication 1, comprenant les étapes de :
a) l'agencement d'une plaque métallique initialement plate sur un support de pièce de fabrication ;
b) la découpe de ladite plaque métallique, de façon à obtenir une plaque ayant une forme en plan égale à celle de la structure de support (10), lorsqu'elle est développée sur un plan ;
c) le perçage de ladite plaque métallique de façon à obtenir lesdits trous traversants circulaires (20) et lesdits trous traversants oblongs (22) ; et
d) le cintrage de ladite plaque métallique de façon à obtenir une paroi d'ancrage (12), une paire de parois latérales (14) et une paire de parois de renfort (16), dans lequel
la paroi d'ancrage (12) est adaptée pour permettre à la structure de support (10) d'être fixée à une structure d'appui ;
la paire de parois latérales (14) sont agencées en parallèle l'une à l'autre et reliées à des bords opposés (12a, 12b) de la paroi d'ancrage (12), chaque paroi latérale (14) ayant au moins un trou traversant circulaire (20) respectif avec des dimensions coïncidant avec un trou traversant circulaire (20) correspondant agencé sur l'autre paroi latérale (14), lesdits trous circulaires (20) étant coaxiaux les uns aux autres, chaque paroi latérale (14) ayant en outre un trou traversant oblong (22) respectif avec une forme et des dimensions coïncidant avec un trou traversant oblong (22) respectif agencé sur l'autre paroi latérale (14), lesdits trous oblongs (22) étant alignés les uns avec les autres, lesdits trous circulaires (20) et lesdits trous oblongs (22) étant configurés deux par deux pour recevoir des broches de support (P1, P2) respectives adaptées pour relier ledit profilé (P) à la structure de support (10),
la paire de parois de renfort (16) se trouvant sur des plans qui ne coïncident pas l'un avec l'autre et étant configurées pour relier lesdites parois latérales (14) transversalement l'une à l'autre,
dans lequel l'étape b) comprend en outre l'étape de :
b') la découpe de ladite plaque métallique de façon à obtenir des fentes d'insertion (26) ;
et dans lequel l'étape d) est suivie par l'étape de :
d') l'insertion de chaque paroi de renfort (16) dans l'une desdites fentes d'insertion (26).
